# EUROPEAN PATENT APPLICATION

(11) **EP 1 330 120 A2**
(43) Date of publication of application: **23.07.2003**
(21) Application number: 03075046.7
(22) Date of filing: 08.01.2003
(51) Int. Cl.: H04N 5/232

(54) **A method for capturing metadata in captured images**

(30) Priority: 16.01.2002 US 50362
(71) Applicant: EASTMAN KODAK COMPANY, Rochester, New York 14650 (US)
(72) Inventor: Mauro, Edward C., Eastman Kodak Company, Rochester, New York 14650-2201 (US)
(74) Representative: Haile, Helen Cynthia

(57) **Abstract**

A method for capturing metadata in a captured scene, the method comprises determining attributes in the scene which may be used for deriving metadata about the scene; after capture of the scene by a user, reading the metadata of the captured scene from a digital representation of the captured scene; and uniquely processing the digital representation based on the discerned metadata.

## Description

The present invention relates to capturing images and their associated metadata and, more particularly, to capturing metadata directly into the captured image.

In the photographic industry, there is often a desire to include data relating to the circumstances surrounding capture of an image, i.e., metadata. Currently, metadata, such as camera orientation, may be captured by special devices included in the camera specifically for this purpose. This metadata is then concatenated to the digital file for later use in processing the image. For example, US patent 5,659,805 discloses including rotatable magnets in the camera for capturing metadata relating to camera orientation.

Although the currently known and utilized method for capturing metadata is satisfactory, it includes drawbacks. Capturing and then including additional metadata requires additional devices that are expensive and prone to inherent mechanical and electrical malfunctions.

Consequently, a need exists for capturing metadata directly by analyzing the desired captured image.

The present invention is directed to overcoming one or more of the problems set forth above. Briefly summarized, according to one aspect of the present invention, a method for capturing metadata in a captured scene, the method comprises identifying a unique "landmark" in the scene; acquiring the metadata represented by the unique landmark; and adding the metadata to the image file.

The above and other objects of the present invention will become more apparent when taken in conjunction with the following description and drawings wherein identical reference numerals have been used, where possible, to designate identical elements that are common to the figures.

The present invention has the advantage of capturing metadata directly into the desired captured image.
Fig. 1 is a drawing of the present invention illustrating capturing metadata directly into an image; and
Fig. 2 is a perspective view of a processor for processing the captured images.

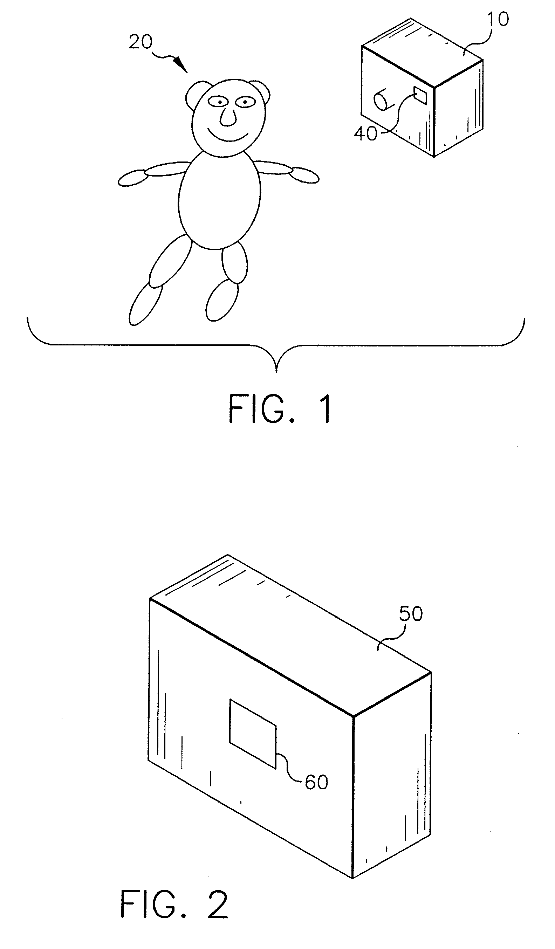

Referring to Fig. 1, there is shown a drawing of the present invention having a digital camera 10 for capturing an image. The digital camera 10 includes optical devices for focusing the incident light on a light sensitive device (such as a charge-coupled device or CMOS imager) for capturing the image, and includes memory for storing the captured image, all of which are well known in the art and will not be discussed in detail herein.

The scene to-be-captured includes a landmark 20 that functions as metadata for the captured scene, as will be described in detail herein below. An example of such a scene may be an image of a Disney cartoon character with a unique pattern or landmark as a part of the scene, such as Minnie Mouse wearing a dress with a particular pattern. It is instructive to note that the landmark 20 may be a pre-determined pattern occurring either naturally or intentionally inserted into the scene. Recognizing the metadata represented by the unique pattern in the scene permits the image to be tagged with information unique to this particular time, place, people in the scene and the like. This metadata will eventually be tagged onto the image header file and used in processing the image.

Another application, upon recognizing the metadata, would be to generate a digital coupon that would be tagged onto the image header file to identify downstream value added products and/or services. The particular coupon generated would be based on the deciphered metadata.

The scene may further include other real-life people of interest to the user. The user then captures the scene with the camera 10 having the known landmark 20, and the image is stored in memory. Pattern recognition software is stored in memory 40 of the camera 10 and used for recognizing the particular landmark. Upon recognizing the landmark 10 via the software, unique metadata information is added to the electronic representation of the image as described above.

Referring to Fig. 2, upon subsequent photofinishing, processing hardware 50 reads the included metadata either stored in the image itself or stored as a part of the image file itself. Upon reading the metadata, the processor 60 identifies pre-determined consumer items to be given to the user; for example, advertisements, promotions, discount coupons, a URL address of interest to Disney tourists or the like to be given to the user. The processor 60 may automatically do this or output a signal for human intervention.

Referring again to Fig. 2, the metadata could also be left in the digital file as returned to the customer. Subsequent processing of the file by the customer 70 would be greatly enhanced by the availability of the metadata attached to the file. For example, the metadata would enhance the ability to automatically creating an index to help with locating their images within large databases.

In another embodiment, an embedded watermark that is imperceptible to the human eye is embedded in the landmark. The embedded watermark may contain, for example, a time/date indication, light conditions forecast for the particular day and the like. This is metadata is then decoded for use in processing the image. Embedded watermarks are well known in the art and will not discussed in detail herein.

## Claims

1. A method for capturing metadata in a captured scene, the method comprising:
(a) determining attributes in the scene, which may be used for deriving metadata about the scene;
(b) after image capture of the scene, reading the metadata of the captured scene from a digital representation of the captured scene; and
(c) uniquely processing the digital representation based on the discerned metadata.

2. The method as in claim 1, wherein step (c) includes providing the user either a URL address, time/date or a discount advertisement or providing a processor of the digital representation camera a time and/or date indication.

3. The method as in claim 1, wherein step (b) includes discerning facial characteristics in the scene or predetermined landmarks.
